# EUROPEAN PATENT APPLICATION

(11) **EP 4 371 806 A1**
(43) Date of publication of application: **22.05.2024**
(21) Application number: 22825164.1
(22) Date of filing: 20.05.2022
(51) Int. Cl.: B60L 53/302, B60L 53/16, B60L 53/18, B60L 53/31, B60L 53/30

(54) **ELECTRIC VEHICLE CHARGING CONNECTOR AND ELECTRIC VEHICLE CHARGING ASSEMBLY INCLUDING SAME**

(30) Priority: 14.06.2021 KR 20210077015
(71) Applicant: LS EV Korea Ltd., Gunpo-si, Gyeonggi-do 15845 (KR)
(72) Inventor: CHOI, Uk Yeol, Seoul 08586 (KR)
(74) Representative: K&L Gates LLP
(86) International application number: PCT/KR2022/007214
(87) International publication number: WO 2022/265238

(57) **Abstract**

The present invention relates to an electric vehicle charging connector in which a chamber space for circulation of a cooling fluid is provided in a connection conductor connecting a power terminal of the electric vehicle charging connector and a connector of a cable to effectively cool the power terminal of the electric vehicle charging assembly and a connection part thereof, which are likely to be extremely heated when charged, and an electric vehicle charging assembly having the same.

## Description

### [Technical Field]

The present invention relates to an electric vehicle charging connector and an electric vehicle charging assembly having the same. More specifically, the present invention relates to an electric vehicle charging connector in which a chamber space for circulation of a cooling fluid is provided in a connection conductor connecting a power terminal of the electric vehicle charging connector and a connector of a cable to effectively cool the power terminal of the electric vehicle charging assembly and a connection part thereof, which are likely to be extremely heated when charged, and an electric vehicle charging assembly having the same.

### [Background Art]

With the spread of electric vehicles, electric vehicle chargers have been widely installed. In addition, quick electric vehicle chargers have come into wide use for quick charging in a short time. Unlike slow charging, an output voltage of a quick electric vehicle charger for quick charging is in a range of DC 50 V to 450 V, a charging current exceeds 100 A, and a time required to charge an electric vehicle through the quick electric vehicle charger to a certain level, e.g., about 80% of a full charge amount, is only thirty to forty minutes. It is expected that a charging current of quick electric vehicle chargers will continuously increase with an increase of battery capacities of electric vehicles and the advancement of charging technology.

Power is supplied to an electric vehicle from a quick electric vehicle charger by connecting an electric vehicle charging cable to a main body of the quick electric vehicle charger, mounting a charger connector on an end of the electric vehicle charging cable, and mounting the charger connector into a connector connection unit of the electric vehicle.

A charging current of such a quick electric vehicle charger is 100 A or more, and thus, heating of an electric vehicle charging cable used to transmit the charging current to an electric vehicle and an electric vehicle charging connector connected to an end of this cable may be issue.

First, in order to minimize heat generated by the electric vehicle charging cable, a method of increasing a diameter of a conductor of a charging cable to reduce a resistance of the conductor may be used but when this method is used, the amount of generated heat is difficult to sufficiently reduce, the weight of the charging cable may increase, and manufacturing costs of the cable may increase.

The electric vehicle charging cable may come into contact with the human body when an electric vehicle charging connector is mounted into a connector connection unit to charge an electric vehicle or is separated from the connector connection unit and placed in a charger, and in this case, a user may be injured or feel discomfort or uneasiness due to heating of the electric vehicle charging cable.

A method of circulating a cooling fluid in an electric vehicle charging cable to cool heat generated in the electric vehicle charging cable has been introduced. In this method, a conductor of the electric vehicle charging cable is cooled using the cooling fluid.

Meanwhile, when an electric vehicle is charged, heating of a power terminal of an electric vehicle charging connector, which is electrically connected to a conductor of an electric vehicle charging cable, due to an increase in resistance at a connection part of the power terminal may be more serious than that of the electric vehicle charging cable.

That is, the electric vehicle charging cable is inserted into the electric vehicle charging connector to connect the conductor of the electric vehicle charging cable to the power terminal of the electric vehicle charging connector, and the electric vehicle charging connector is detachably connected to a connection unit of a connector of the electric vehicle. Therefore, electrical resistance may increase at connection regions between the power terminals of the connectors and between the power terminals of the connectors and the connector of the conductor, thus increasing heating of the connection regions.

With a cooling structure using a cooling fluid of the related art as described above, the cooling performance of an electric vehicle cable can be improved but a method of cooling a power terminal of an electric vehicle charging connector and the like is additionally needed.

### [Disclosure]

### [Technical Problem]

The present invention is directed to providing an electric vehicle charging connector in which a chamber space for circulation of a cooling fluid is provided in a connection conductor connecting a power terminal of the electric vehicle charging connector and a connector of a cable to effectively cool the power terminal of the electric vehicle charging assembly and a connection part thereof, which are likely to be extremely heated when charged, and an electric vehicle charging assembly having the same.

### [Technical Solution]

To achieve these objects, the present invention provides an electric vehicle charging assembly comprising: an electric vehicle charging cable comprising: at least one ground unit; at least one communication unit; a plurality of power units each including a conductor and an insulating layer surrounding the conductor; at least one cooling fluid supply tube configured to supply a cooling fluid from an electric vehicle charger; and at least one cooling fluid collection tube configured to collect the cooling fluid supplied from the cooling fluid supply tube to the electric vehicle charger; and an electric vehicle charging connector comprising: a housing provided with a connecting part at a front side, which is connected to an connector connection unit of an electric vehicle and a cable support at a rear side, which supports the electric vehicle charging cable inserted thereinto; at least one communication terminal mounted to be exposed to the connecting part and connected to the communication unit; a plurality of power terminals mounted to be exposed to the connecting part and connected to the plurality of power units; and a plurality of connection connectors located in the housing and including a chamber space to which the cooling fluid supplied from the cooling fluid supply tube flows and thereafter be collected to the cooling fluid collection tube, wherein the plurality of power terminals and the conductors of the plurality of power units are mounted on a front and rear of the connection connector.

And the cooling fluid supply tube and the cooling fluid collection tube may be connected to an outer circumferential surface of the chamber space of the connection conductor to communicate with the inside of the chamber space.

And the cooling fluid supply tube and the cooling fluid collection tube may be connected to a front side of and a rear side of an upper surface of the connection conductor, respectively.

And rear ends of the plurality of power terminals of the electric vehicle charging connector may communicate with the chamber space of the connection conductor to be directly cooled by the cooling fluid, when the plurality of power terminals are mounted on the connection conductor.

And the conductors of the plurality of power units of the electric vehicle charging cable may be connected to pipe type connection holes in the rear of the connection conductor not to communicate with the chamber space of the connection conductor.

And the cooling fluid supply tube may be provided inside each of the plurality of power units, the cooling fluid supply tube splitting from each of the plurality of power units behind the connection conductor to be connected to the connection conductor.

And the cooling fluid supply tube may be included in the conductor of each of the plurality of power units.

And the cooling fluid collection tube may be provided outside each of the plurality of power units.

And a plurality of cooling fluid collection tubes may be provided, the plurality of cooling fluid collection tubes being combined into one tube.

And the cooling fluid collection tube may be provided inside each of the plurality of power units, may split from each of the plurality of power units behind the connection conductor to be connected to the connection conductor.

And the cooling fluid collection tube may be included in the conductor of each of the plurality of power units.

And the cooling fluid supply tube may be provided outside each of the plurality of power units.

And the cooling fluid supply tube may split into several parts behind the connection conductor to be connected to each of the connection conductors.

And to achieve these objects, the present invention provides an electric vehicle charging connector comprising: a housing including a connecting part at a front side and a cable support at a rear side, wherein the connecting part is connected to a connector connection unit of an electric vehicle and the cable support supports an electric vehicle charging cable inserted thereinto; at least one communication terminal mounted to be exposed to the connecting part and connected to a communication unit of the electric vehicle charging cable; a plurality of power terminals mounted to be exposed to the connecting part and connected to a plurality of power units of the electric vehicle charging cable; and a connection conductor located in the housing and including a chamber space to which a cooling fluid supplied from a cooling fluid supply tube flows and thereafter be collected to a cooling fluid collection tube, wherein the plurality of power terminals and conductors of the plurality of power units are mounted on a front and rear of the connection conductor.

### [Advantageous Effects]

According to an electric vehicle charging connector and an electric vehicle charging assembly having the same according to the present invention, a power terminal of a connector is mounted to be exposed in a chamber space of a connection conductor connected to a terminal of the electric vehicle charging connector, so that the power terminal of the connector may be directly cooled by a cooling fluid flowing in the chamber space, thereby efficiently cooling the power terminal of the connector, as well as a connector of a cable.

In addition, according to the electric vehicle charging connector and the electric vehicle charging assembly having the same according to the present invention, a connector and a cable can be effectively cooled using a cooling fluid to prevent safety accidents, such as fire or a user's burn damage, when an electric vehicle is charged, reduce a user's anxiety, and improve the stability of an electric vehicle charging system.

### [Description of Drawings]

FIG. 1 illustrates an electric vehicle charging system that includes an electric vehicle charger, an electric vehicle charging assembly, and an electric vehicle.
FIG. 2 is a perspective view of an electric vehicle charging assembly that includes an electric vehicle charging cable and an electric vehicle charging connector connected to the electric vehicle charging cable.
FIG. 3 is a cross-sectional view of an electric vehicle charging cable of an electric vehicle charging assembly according to the present invention.
FIG. 4 is a rear perspective view of an entire electric vehicle charging assembly according to the present invention.
FIG. 5 is a rear view of an electric vehicle charging assembly according to the present invention.
FIG. 6 is a side cross section view of an electric vehicle charging assembly according to the present invention.
FIG. 7 is an enlarged view of a connection region of a connection conductor of an electric vehicle charging connector of an electric vehicle charging assembly according to the present invention.
FIGS. 8 and 9 are rear perspective views of an electric vehicle charging assembly according to the present invention, in which the flow of a cooling fluid in a flow path is shown.

### [Mode for Invention]

Hereinafter, embodiments of the present invention will be described in detail with reference to the accompanying drawings. The present invention is, however, not limited thereto and may be embodied in many different forms. Rather, the embodiments set forth herein are provided so that this disclosure will be thorough and complete, and fully convey the scope of the invention to those of ordinary skill in the art. Throughout the specification, the same reference numbers represent the same elements.

In the following description, an electric vehicle ev is a vehicle that drives an electric motor using electric energy charged in a battery of the vehicle and uses a driving force of the electric motor as power of the vehicle, and particularly, a plug-in electric vehicle (PEV).

However, the electric car ev should not be limited to a general car running on the road and should be understood as a concept including a cart, a working vehicle, a two-wheeled vehicle, etc., as well as the general car running on the road.

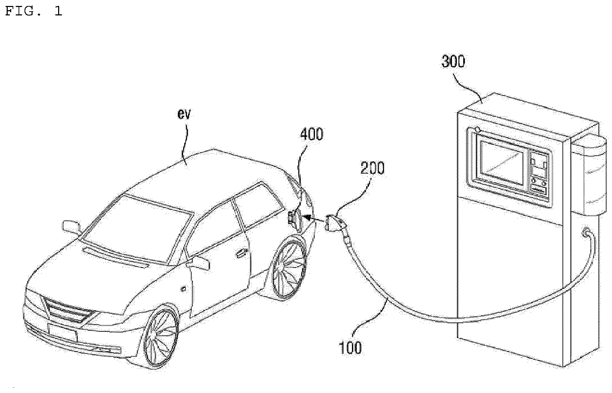

FIG. 1 illustrates an electric vehicle charging system that includes an electric vehicle charger, an electric vehicle charging assembly, and an electric car ev.

An electric vehicle charger 300 is connected to an electric vehicle charging connector 200 through an electric vehicle charging cable 100 to supply power to the electric car ev. The electric vehicle charging connector 200 is provided at an end of the electric vehicle charging cable 100.

The electric vehicle charging connector 200 may be mounted into a connector connection unit 400 of the electric car ev to supply power. Charging of the electric car ev may be completed in a short time by a quick electric vehicle charger.

During quick charging of an electric vehicle, a conductor of the electric vehicle charging cable 100 and a power terminal of the electric vehicle charging connector 200 to which the connector is connected may be overheated due to a high current capacity.

The electric vehicle charging assembly 1000 according to the present invention includes tubes (a cooling fluid supply tube and a cooling fluid collection tube) for supplying and collecting a cooling fluid flowing through both the conductor of the electric vehicle charging cable 100 and the power terminal of the electric vehicle charging connector 200, so that the cooling fluid may be supplied to a chamber space inside a connection conductor connected to the power terminal of the electric vehicle charging connector 200, flow inside the chamber space, and thereafter be collected in the chamber space, thereby quickly cooling the power terminal and a conductor connection region of the electric vehicle charging assembly 1000 that are highly likely to be heated.

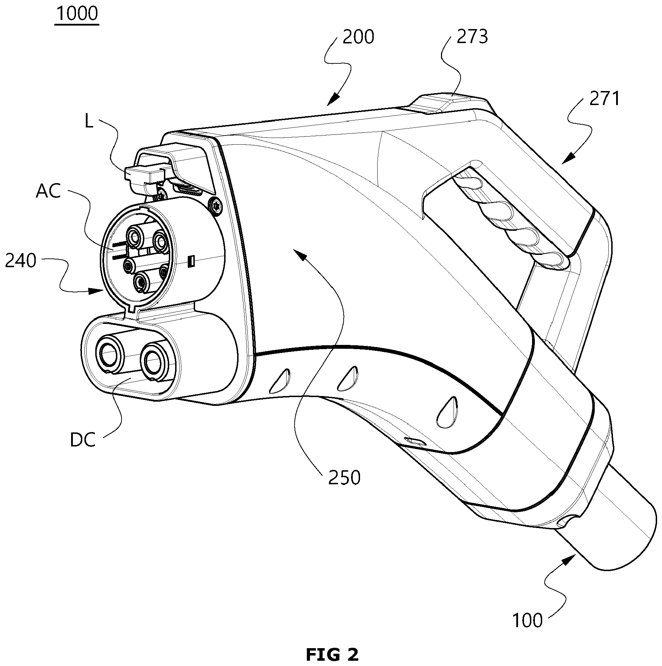

FIG. 2 is a perspective view of an electric vehicle charging assembly that includes an electric vehicle charging cable included in an electric vehicle and an electric vehicle charging connector configured to be connected to the electric vehicle charging cable.

In an electric vehicle charging assembly 1000 shown in FIG. 2, an electric vehicle charging connector 200 is configured to be mounted on an end of the electric vehicle charging cable 100 and detachably mounted on the connector connection unit 400 of the electric car ev.

The electric vehicle charging connector 200 may include a connector housing 270 provided with a connecting part 240, which is connected to the connector connection unit 400 of the electric car ev, at a front side, and a cable support 260, which supports the electric vehicle charging cable 100 inserted thereinto, at a rear side.

The connector housing 270 may be formed of an insulating resin material such as plastic, protect the inner components of the electric vehicle charging connector 200, and form an exterior of the electric vehicle charging connector 200. A connector handle part 271 may be provided on an upper surface of the connector housing 270 to allow a user to easily grasp the connecting part 240 with a hand and connect the connecting part 240 to or separate the connecting part 240 from the connector connection unit 400.

The connector handle part 271 may include a connector control part 253 in the form of a control switch or control button for allowing the electric vehicle charging assembly 1000 to start or end charging the electric car ev while the connecting part 240 is connected to the connector connection unit 400.

The electric vehicle charging connector 400 may further include a locking unit L for locking when the connecting part 240 is connected to the connector connection unit 400 of the electric car ev. The locking unit L may include a locking means for selective locking, a physical switch for selectively canceling a locked state, or a control switch for control of a charging operation, etc. and be provided on the connecting part 240.

The electric vehicle charging connector 200 is applicable to the 'CHAdeMO' method used in Japan or the Renault '3-phase AC' method, as well as the combo ('TYPE1') method used in the USA and Europe and determined as a future unification standard.

In the electric vehicle charging connector 200 employing the combo ('TYPE1') method, alternating current (AC) or direct current (DC) conectors may be integrated such that a slow charger AC and a fast charger DC are iincluded ine ach connecting part 240 to support both slow charging and fast charging.

A cable support 260 into which a cable is inserted may be provided on a lower rear portion of the electric vehicle charging connector connector 200 according to the present invention.

In the electric vehicle charging cable 100 inserted into the cable support 260 of the electric vehicle charging connector 200 of the present invention, the conductor thereof and a power terminal electrically connected to the conductor may be overheated by a high current in the case of quick charging of an electric vehicle, thus causing damage to machine parts or safety accidents such as a user's burn damage.

Accordingly, in the present invention, a structure for efficiently cooling both an electric vehicle charging cable and an electric vehicle charging connector using a cooling fluid is employed.

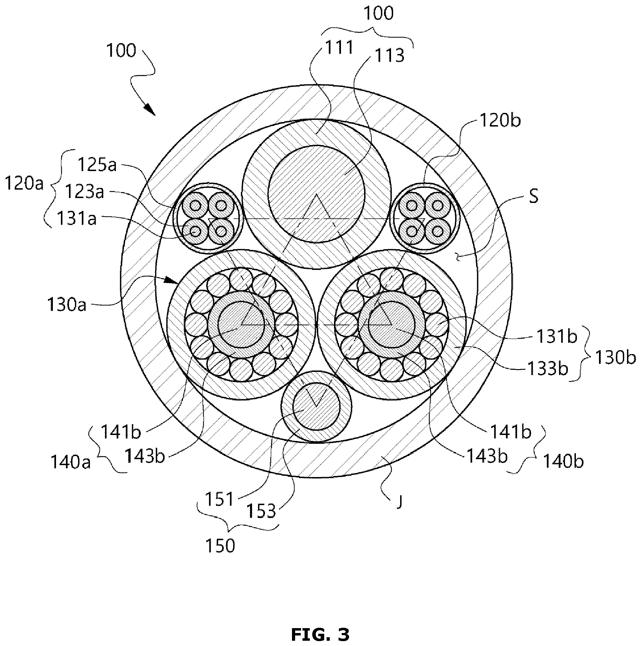

FIG. 3 is a cross-sectional view of an electric vehicle charging cable of an electric vehicle charging assembly according to the present invention.

As shown in FIG. 3, an electric vehicle charging cable 100 of an electric vehicle charging assembly 1000 of the present invention may include at least one ground unit 110; at least one communication unit 120; a pair of power units 130 each including a conductor 131 and an insulating layer 133 surrounding the conductor 131; and at least one cooling fluid supply tube for supplying a cooling fluid from the electric vehicle charger 300 (see FIG. 1) and at least one cooling fluid collection tube for collecting the cooling fluid supplied from the cooling fluid supply tube to the electric vehicle charger 300.

Here, at least one of the cooling fluid supply tube or the cooling fluid collection tube may be provided inside the pair of power units 130, and the other may be disposed outside the pair of power units 130.

In the embodiment of FIG. 3, a cooling fluid supply tube 140 is provided inside the pair of power units 130 and a cooling fluid collection tube 150 is provided outside the pair of power units 130.

Here, the cooling fluid supply tube 140 may include a cooling tube 141 and a cooling channel 143 formed in the cooling tube 141 to circulate a cooling fluid, and the cooling fluid collection tube 150 may include a cooling tube 151 and a cooling channel 153 formed in the cooling tube 151 to circulate the cooling fluid.

In the following description, a tube inside the conductor 131 of the power unit 130 is described as a cooling fluid supply tube for cooling the conductor 131 of the power unit 130 and supplying the cooling fluid to a connection conductor during the supplying of the cooling fluid to the cooling fluid supply tube, and a fluid tube outside the power unit 130 is described as a cooling fluid collection tube for collecting the cooling fluid cooling the connection conductor to an electric vehicle charger, and vice versa.

That is, a tube outside a power unit may function as a cooling fluid supply tube and a tube inside the power unit may function as a cooling fluid collection tube.

Generally, in the electric vehicle charging cable 100, heating of the power unit 130 configured to supply power is a main issue, and a pair of cooling fluid supply tubes 140 may be included in the pair of power units 130 of the electric vehicle charging cable 100 to circulate the cooling fluid therein, thereby cooling the power unit 130 when heat is conductedt through the conductor 131 of the power unit 130.

Preferably, the cooling fluid supply tube 140 is disposed at the center of the conductor 131 of the power unit 130 to uniformly cool an inner circumferential surface of the conductor 131 of the power unit 130.

The cooling fluid collection tube 150 may be provided outside the pair of power units 130. Preferably, the cooling fluid collection tube 150 may be provided to circumscribe about outer circumferential surfaces of the insulating layers 133 of the pair of power units 130. Accordingly, it is possible to achieve an effect of cooling the insulating layer 133 of the power unit 130 or a surrounding area once more during the collecting of the cooling fluid flowing in the cooling channel 153 of the cooling fluid collection tube 150.

As shown in FIG. 3, the configuration of the electric vehicle charging cable 100 is only an example, and a total outer diameter of the electric vehicle charging cable 100 may be reduced by adjusting the positions of the components thereof such that a triangle connecting the centers of the pair of power units 130 and the ground unit 110 and a triangle connecting the centers of the pair of communication units 120 and the cooling fluid collection tube 150 are regular triangles, but the present invention is not limited to the above structure.

Hereinafter, a structure of an electric vehicle connector of an electric vehicle charging assembly and a connection structure of a cooling fluid supply tube and a cooling fluid collection tube will be described in detail.

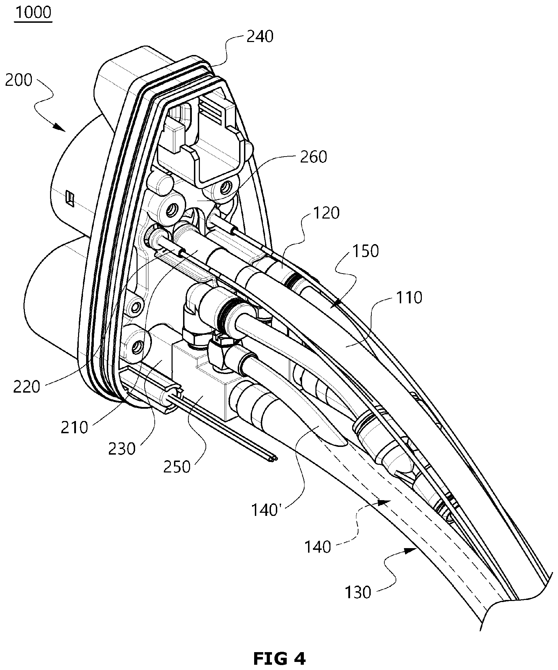

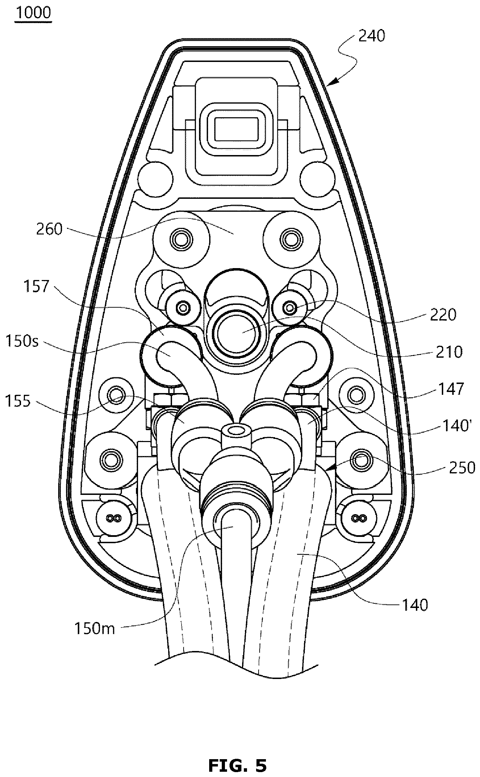

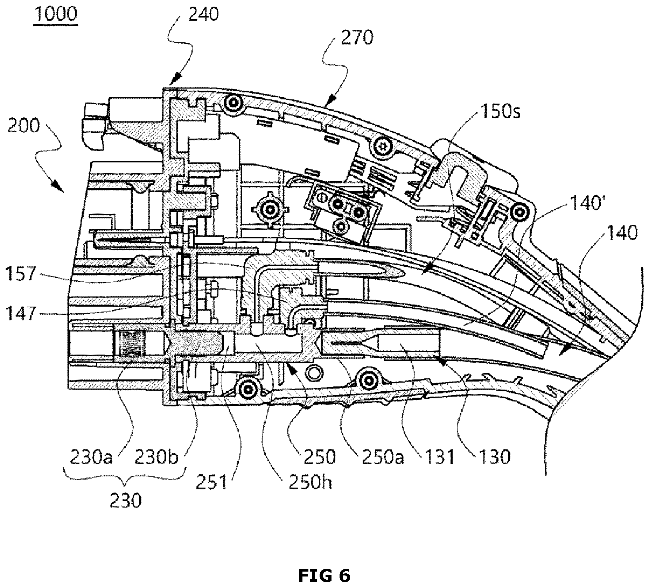

FIG. 4 is a rear perspective view of an electric vehicle charging assembly according to the present invention, in which a housing of an electric vehicle charging connector is removed. FIG. 5 is a rear view of the electric vehicle charging assembly according to the present invention, in which the housing of the electric vehicle charging connector is removed. FIG. 6 is a side cross-sectional view of the electric vehicle charging assembly according to the present invention.

In the electric vehicle charging assembly 1000, the electric vehicle charging cable 100 may be inserted, supported and connected through the cable support 260 on the back of the electric vehicle charging connector 200, and the connector connection unit 400 (see FIG. 1) may be detachably mounted on the connecting part 240 on the front of the electric vehicle charging connector 200 to supply power to the electric car ev and transmit or receive a control signal.

The electric vehicle charging connector 200 according to the present invention may include a cable support 260 inside the rear of the connecting part 240 connected to the electric vehicle connector connection unit 400, and the cable support 260 may provide spaces for mounting therein terminals to be connected to the ground unit 110, the communication unit 120, and the power terminal 130 of the electric vehicle charging cable 100.

The electric vehicle charging connector 200 may include at least one ground terminal 210 mounted through the cable support 260 to be exposed in front of the connecting part 240 and connected to the ground unit 110, at least one communication terminal 220 connected to the communication unit 120, and a plurality of power terminals 230 connected to the power unit 130.

The electric vehicle charging connector 200 may further include a plurality of connection conductors 250 in which a plurality of power terminals 230 and the conductors 131 of the plurality of power units 130 are mounted on front and rear sides thereof, and which include therein a chamber space through which a cooling fluid supplied via the cooling fluid supply tube 140 flows and thereafter is collected to the cooling fluid collection tube 150.

The number of connection conductors 250 may equal to the number of power units or the number of power terminals because the connection conductors 250 are configured to connect power units or power terminals.

The cooling fluid is brought in direct contact with a connector and a cable conductor for supplying power in an insulating manner and thus is preferably an insulating cooling fluid.

According to the European electric vehicle quick charging standards IEC 62196-3, it is recommended that a temperature change ΔT (°C) of the electric vehicle charging assembly 1000 before and after charging of the electric car ev be about 50 °C or less in terms of user safety. Thus, when it is assumed that an electric car is charged at room temperature by a user, a maximum temperature of the electric vehicle charging assembly 100 should be maintained at about 70 °C or less, and preferably about 65 °C or less.

As described above, during quick charging of the electric car ev using the electric vehicle charging assembly 1000, the conductor 131 of the power unit 130 of the electric vehicle charging cable 100 and the power terminal 230 of the electric vehicle charging connector 200 connected thereto are likely to be extremely heated and thus various cooling methods have been introduced to solve this problem.

In the related art, a cooling method including a thermally conductive heat absorbing member in the conductor 131 of the power unit 130 of the electric vehicle charging cable 100 and the power terminal 230 of the electric vehicle charging connector 200 connected thereto to absorb heat generated in the power terminal 230 has been introduced but heat generated in the power terminal 230 cannot be sufficiently dissipated.

In addition, a cooling method of including an external cooling chamber outside the power terminal 230 of the electric vehicle charging connector 200 to accommodate the power terminal 230 and circulate a cooling fluid in the external cooling chamber has been introduced but in this case, only an outer surface of the power terminal 230 can be cooled by the cooling fluid in the external cooling chamber and thus a specific region of a cable assembly may be heated up to about 65 °C during the quick charging of an electric vehicle, thus reducing cooling performance.

Accordingly, in order to prevent severe heating when a cable conductor is in direct contact with the power terminal 230 of the electric vehicle charging connector 200, the present inventors have completed the electric vehicle assembly 1000 with improved cooling performance by providing the connection conductor 250 on a region between the power terminal 230 and the conductor 131 and allowing the power terminal 230 and the conductor 131 to be cooled directly by a cooling fluid flowing in a chamber space 250h inside the connection conductor 250.

When in the electric vehicle charging assembly 1000 of the present invention, the cooling fluid supply tube 140 is provided inside the power unit 130, the cooling fluid supply tube 140 may be configured to split from the power unit 130 behind the connection conductor 250 and be connected to the connection conductor 250.

A cooling fluid supply tube 140' may branch from the cooling fluid supply tube 140 outside the insulating layer 133 of the power unit 130, and an end thereof may be connected to the connection conductor 250. Here, although it is illustrated herein that the end of the cooling fluid supply tube 140' is connected to the connection conductor 250 through a '¬'-shaped flow path conversion valve 147, but embodiments are not limited thereto and various connection methods such as bonding by soldering or fastening members may be used.

In this case, the cooling fluid flowing in the cooling tube 141 of the cooling fluid supply tube 140 along the inside of the power unit 130 may flow downward to the chamber space 250h of the connection conductor 250 as a direction of the flow path changes to a vertical direction from a connection region of the flow path conversion valve 147.

As described above, when the cooling fluid is supplied to the connection conductor 250 through the cooling fluid supply tube 140 inside the power unit 130, the cooling fluid may sequentially pass through the inside of the cooling fluid supply tube 140', which extends to the outside, flow into the chamber space 250h of the connection conductor 250 of the electric vehicle charging connector and be collected to the cooling fluid collection tube 150 outside the power unit 130.

A plurality of cooling fluid collection tubes 150 may be provided and combined as one tube. In this case, the cooling fluid collection tube 150 may include a plurality of cooling fluid collection tubes 150s splitting from the cooling fluid collection tube 150 and each connected to one of connection conductors 250, and a main cooling fluid collection tube 150m for combining flow paths of cooling fluids flowing through the plurality of cooling fluid collection tubes 150s into an integrated flow path.

Here, the cooling fluid collection tube 150 may include various types of connection members, such as a flow path connection valve 155, for connecting the main cooling fluid collection tube 150m and the plurality of cooling fluid collection tubes 150s.

Accordingly, a cooling fluid flowing in turbulent flow in the chamber space 250h of the connection conductors 250 may be collected through the plurality of cooling fluid collection tubes 150s connected to the connection conductors 250, and thereafter the cooling channels of the cooling fluids inside the plurality of cooling fluid collection tubes 150s may be combined in the main cooling fluid collection tube 150m through the flow path connection valve 155 to collect the cooling fluids to the electric vehicle charger 300 at once.

Similarly, various connection methods may be employed to connect ends of the plurality of cooling fluid collection tubes 150s of the cooling fluid collection tube 150 to upper ends of the connection conductors 250, and for example, a '¬'-shaped flow path conversion valve may be mounted on the ends of the plurality of cooling fluid collection tubes 150s to connect the ends of the plurality of cooling fluid collection tubes 150s to the upper ends of the connection conductors 250.

A power terminal of an electric vehicle charging connector of the electric vehicle charging assembly 1000 will be described in detail below.

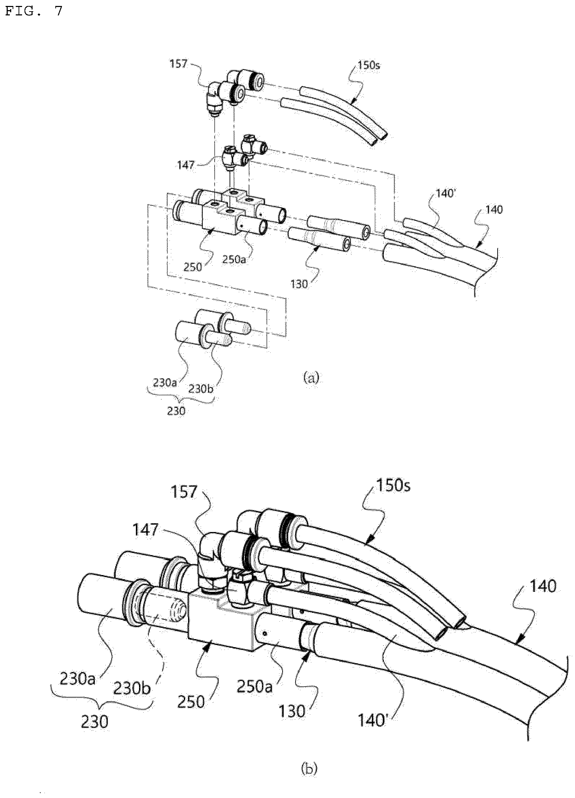

FIG. 7 is an enlarged view of a connection region of a connection conductor 250 of an electric vehicle charging connector of an electric vehicle charging assembly according to the present invention.

Referring to FIG. 7, in an electric vehicle charging assembly 1000 according to the present invention, a cooling fluid supply tube 140 and a cooling fluid collection tube 150 may be connected to an outer circumferential surface of a chamber space 250h of the connection conductor 250 to communicate with the inside of the chamber space 250h. In addition, the cooling fluid supply tube 140 and the cooling fluid collection tube 150 may be connected to a front side of and a rear side of an upper surface of the connection conductor 250, respectively.

As described above, in the electric vehicle charging assembly 1000 of the present invention, the connection conductor 250 is provided on a region between a power terminal 230 of an electric vehicle charging connector and a conductor 131 of a power unit of a cable rather than directly connecting the power terminal 230 and the conductor 131. Here, in order to reduce the volume of a housing 250 of the electric vehicle connector as much as possible, the connection conductor 250 may extend in a length direction of the caable but embodiments are not limited thereto.

A rear end of the power terminal 230 of the electric vehicle charging connector 200 when mounted on the connection conductor 250 may communicate with a chamber space 250h of the connection conductor 250 to be directly cooled by a cooling fluid.

The connector power terminal 230 may include a power terminal front connection hole 230a that is in the form of a pipe surrounding an outer circumferential surface of a conductor of the connector connection unit 400 to accommodate the conductor of the connector connection unit 400, and a power terminal rear connection hole 230b protruding and extending in a direction opposite to the power terminal front connection hole 230a to be electrically connected to the connection conductor 250.

The power terminal 230 may include a sealing member 251 between the power terminal rear connection hole 230b and the connection conductor 250 to prevent the cooling fluid flowing inside the chamber space 250h of the connection conductor 250 from leaking to the outside of the power terminal 230, thus causing a user's burn damage or causing discomfort to the user.

The sealing member 251 may be, for example, an O-ring formed of a rubber elastic material or the like and be brought in close contact between the power terminal 230 and the connection conductor 250 to seal the chamber space 250h of the connection conductor 250, but embodiments are not limited thereto.

The conductor 131 of the power unit 130 of the electric vehicle charging cable 100 may be disposed to be connected to a pipe type connection hole 250a in the rear of the connection conductor 250 to increase an electrical contact area with the conductor 131and not to communicate with the chamber space 250h of the connection conductor 250.

As described above, the conductor 131 of the power unit 130 of the electric vehicle charging cable 100 is not directly electrically connected to the connector power terminal 230 but is connected to the connection hole 250a of the connection conductor 250 to be connected to the conductor power terminal 250 by a bypass connection method, and the cooling fluid is caused to flow in the chamber space 250h inside the connection conductor 250, thereby improving cooling performance.

The conductor 131 of the electric vehicle charging cable may be formed of a metal with excellent electrical conductivity, e.g., tin, copper, aluminum, or an alloy thereof, and preferably, an annealed copper wire. The conductor 131 may have an aggregation complex structure in which a plurality of wires are aggregated in a regular aggregation pitch and several of the aggregated wires are combined together in a regular pitch.

The pipe type connection hole 250a in the rear of the connection conductor 250 is a part to which the conductor 131 of the cable is connected in the longitudinal direction and may be formed of a metal with excellent electrical conductivity, e.g., copper, aluminum, or an alloy thereof, similar to the conductor 131.

The cooling fluid supply tube 140 and the cooling fluid collection tube 150 may be connected to the front side of and the rear side of the upper surface of the connection conductor 250, respectively. As described above, the cooling fluid supply tube 140 and the cooling fluid collection tube 150 may be connected to the connection conductor 250 through a connection valve or the like but embodiments are not limited thereto.

In the embodiment of FIG. 7, the upper surface of the connection conductor 250 may be provided with at least one inlet 250i through which a cooling fluid supplied into a cooling fluid supply tube 140' splitting outward from a point on the power unit 130 may flow into the connection conductor 250, and at least one outlet 233o through which the cooling fluid may be collected to the cooling fluid collection tube 150.

In this case, the inlet 250i and the outlet 250o in the upper surface of the connection conductor 250 may have shapes corresponding to each other, and cross sections thereof may be circular or elliptical.

The flow of the cooling fluid in a flow path in the electric vehicle charging assembly 1000 will be described in detail below.

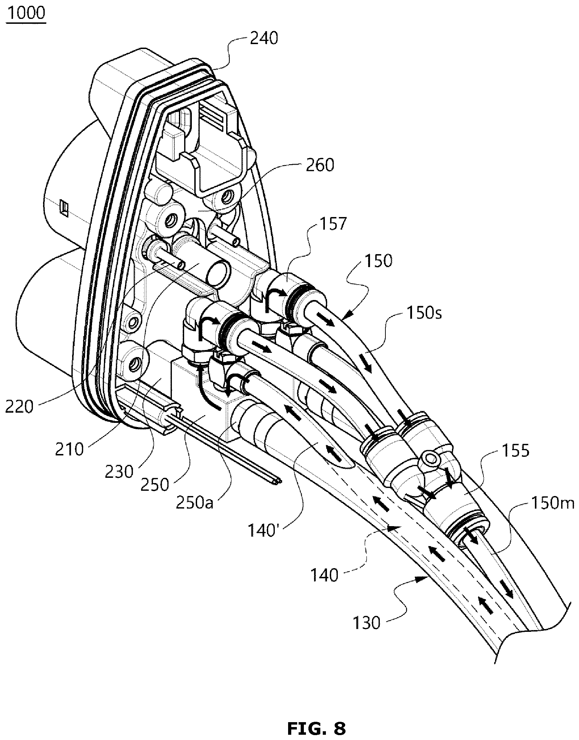

FIG. 8 is a rear perspective view of an electric vehicle charging assembly according to the present invention, in which the flow of a cooling fluid in a flow path is shown.

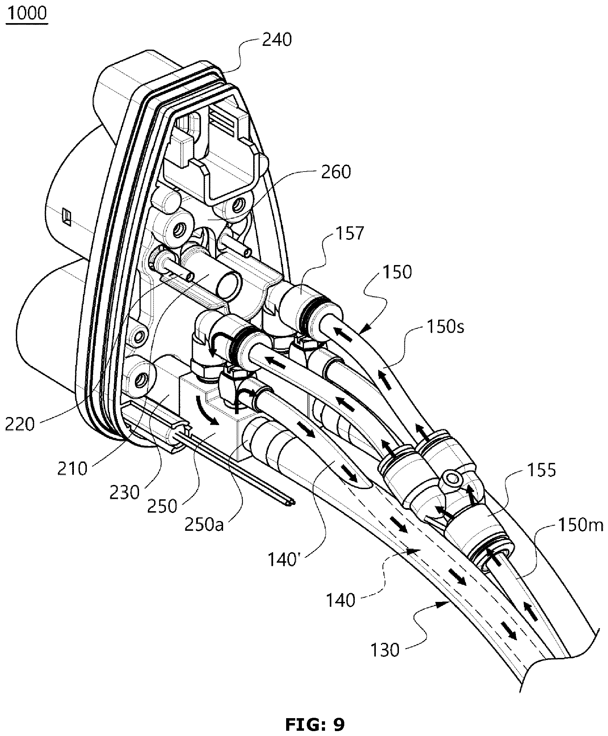

Specifically, FIG. 8 illustrates an embodiment in which the cooling fluid supply tube is provided inside the power unit. FIG. 9 illustrates another embodiment in which the cooling fluid collection tube is provided inside the power unit.

As shown in FIG. 8, in the electric vehicle charger 300 (see FIG. 1), a cooling fluid supplied through the cooling fluid supply tube 140 of the power unit130 flows inside the conductor 131 of the power unit 130 while cooling the conductor 131 and thereafter flows along the cooling fluid supply tube 140' splitting outward from a point on the power unit 130.

Next, the flow of the flow path changes as the cooling fluid passes through the flow path conversion valve 147 mounted on an end of the cooling fluid supply tube 140', and thus, the connector power terminal 230 and the power unit 130 are entirely cooled inside the chamber space 250h of the connection conductor 250.

Thereafter, the cooling fluid cooling the inside of the connection conductor 250 while flowing inside the connection conductor 250 may be collected while flowing upward along the cooling fluid collection tubes 150s connected to an upper part of the connection conductor 250.

The cooling fluid flowing in the chamber space of the connection conductor generates turbulence, thus maximizing cooling performance.

Thereafter, the cooling fluids collected along the cooling fluid collection tubes connected to the connection conductors 250 are collected at once as the flow paths thereof are integrated in one main cooling fluid collection tube 150m.

In addition, the cooling fluid may be in contact with the power unit of the electric vehicle charging cable during the collecting of the cooling fluid through the main cooling fluid collection tube 150m and thus the outer circumferential surface of the power unit may be also cooled.

In another embodiment, as shown in FIG. 9, the cooling fluid flows to the vicinity of the connector while cooling an outer circumferential surface of an adjacent power unit along the cooling fluid supply tube 140 outside the power unit, the cooling fluid supply tube 140 splits into several cooling fluid supply tubes, and thus, the cooling fluid flows to the connection conductors 250 along the several cooling fluid supply tubes. Thereafter, a flow path of the cooling fluid may be set such that the cooling fluid cools the power terminal 230 and the power unit 130 while flowing inside the connection conductor 250, flows along a cooling fluid collection tube 150s splitting from the power unit 130, and is collected while flowing to the cooling fluid collection tube 150 inside the power unit 130.

Similar to the previous embodiment, a conductor of a power unit may be cooled by the cooling fluid during the collecting of the cooling fluid to an electric vehicle charger through the inside of the power unit, after the cooling fluid is supplied from the cooling fluid collection tube 150m and the connection conductor is cooled by the cooling fluid.

That is, in both the embodiments of FIGS. 8 and 9, the electric vehicle charging assembly 1000 according to the present invention has a structure in which the cooling fluid supplied from a cooling fluid supply tube inside or outside a pair of power units 130 of the electric vehicle charging cable 100 flows inside the connection conductor 250 and thereafter is collected, so that not only heat generated in a power terminal of a conductor but also the power units 130 of the electric vehicle charging cable 100 can be effectively cooled.

While the present invention has been described above with respect to exemplary embodiments thereof, it would be understood by those of ordinary skilled in the art that various changes and modifications may be made without departing from the technical conception and scope of the present invention defined in the following claims. Thus, it is clear that all modifications are included in the technical scope of the present invention as long as they include the components as claimed in the claims of the present invention.

## Claims

1. An electric vehicle charging assembly comprising:
an electric vehicle charging cable comprising: at least one ground unit; at least one communication unit; a plurality of power units each including a conductor and an insulating layer surrounding the conductor; at least one cooling fluid supply tube configured to supply a cooling fluid from an electric vehicle charger; and at least one cooling fluid collection tube configured to collect the cooling fluid supplied from the cooling fluid supply tube to the electric vehicle charger; and
an electric vehicle charging connector comprising: a housing provided with a connecting part at a front side, which is connected to an connector connection unit of an electric vehicle and a cable support at a rear side, which supports the electric vehicle charging cable inserted thereinto; at least one communication terminal mounted to be exposed to the connecting part and connected to the communication unit; a plurality of power terminals mounted to be exposed to the connecting part and connected to the plurality of power units; and a plurality of connection connectors located in the housing and including a chamber space to which the cooling fluid supplied from the cooling fluid supply tube flows and thereafter be collected to the cooling fluid collection tube, wherein the plurality of power terminals and the conductors of the plurality of power units are mounted on a front and rear of the connection connector.

2. The electric vehicle charging assembly of claim 1, wherein the cooling fluid supply tube and the cooling fluid collection tube are connected to an outer circumferential surface of the chamber space of the connection conductor to communicate with the inside of the chamber space.

3. The electric vehicle charging assembly of claim 2, wherein the cooling fluid supply tube and the cooling fluid collection tube are connected to a front side of and a rear side of an upper surface of the connection conductor, respectively.

4. The electric vehicle charging assembly of claim 1, wherein rear ends of the plurality of power terminals of the electric vehicle charging connector communicate with the chamber space of the connection conductor to be directly cooled by the cooling fluid, when the plurality of power terminals are mounted on the connection conductor.

5. The electric vehicle charging assembly of claim 1, wherein the conductors of the plurality of power units of the electric vehicle charging cable are connected to pipe type connection holes in the rear of the connection conductor not to communicate with the chamber space of the connection conductor.

6. The electric vehicle charging assembly of claim 1, wherein the cooling fluid supply tube is provided inside each of the plurality of power units, the cooling fluid supply tube splitting from each of the plurality of power units behind the connection conductor to be connected to the connection conductor.

7. The electric vehicle charging assembly of claim 6, wherein the cooling fluid supply tube is included in the conductor of each of the plurality of power units.

8. The electric vehicle charging assembly of claim 6, wherein the cooling fluid collection tube is provided outside each of the plurality of power units.

9. The electric vehicle charging assembly of claim 8, wherein a plurality of cooling fluid collection tubes are provided, the plurality of cooling fluid collection tubes being combined into one tube.

10. The electric vehicle charging assembly of claim 1, wherein the cooling fluid collection tube is provided inside each of the plurality of power units, splits from each of the plurality of power units behind the connection conductor to be connected to the connection conductor.

11. The electric vehicle charging assembly of claim 10, wherein the cooling fluid collection tube is included in the conductor of each of the plurality of power units.

12. The electric vehicle charging assembly of claim 10, wherein the cooling fluid supply tube is provided outside each of the plurality of power units.

13. The electric vehicle charging assembly of claim 12, wherein the cooling fluid supply tube splits into several parts behind the connection conductor to be connected to each of the connection conductors.

14. An electric vehicle charging connector comprising:
a housing including a connecting part at a front side and a cable support at a rear side, wherein the connecting part is connected to a connector connection unit of an electric vehicle and the cable support supports an electric vehicle charging cable inserted thereinto;
at least one communication terminal mounted to be exposed to the connecting part and connected to a communication unit of the electric vehicle charging cable;
a plurality of power terminals mounted to be exposed to the connecting part and connected to a plurality of power units of the electric vehicle charging cable; and
a connection conductor located in the housing and including a chamber space to which a cooling fluid supplied from a cooling fluid supply tube flows and thereafter be collected to a cooling fluid collection tube, wherein the plurality of power terminals and conductors of the plurality of power units are mounted on a front and rear of the connection conductor.
